(19)

Europäisches Patentamt

European Patent Office

Office européen des brevets

(11) **EP 0 845 306 A1**

(12) **EUROPEAN PATENT APPLICATION**
published in accordance with Art. 158(3) EPC

(43) Date of publication:
03.06.1998 Bulletin 1998/23

(21) Application number: 96922254.6

(22) Date of filing: 04.07.1996

(51) Int. Cl.$^6$: **B09B 3/00**, A62D 3/00

(86) International application number:
PCT/JP96/01885

(87) International publication number:
WO 97/02101 (23.01.1997 Gazette 1997/05)

(84) Designated Contracting States:
DE FR GB NL

(30) Priority: 05.07.1995 JP 169492/95
07.07.1995 JP 171944/95
01.09.1995 JP 225396/95
01.09.1995 JP 225631/95

(71) Applicant:
KANEGAFUCHI KAGAKU KOGYO KABUSHIKI
KAISHA
Kita-ku, Osaka-shi, Osaka 530 (JP)

(72) Inventors:
• UESHIMA, Kenji,
Kanegafushi Kagaku Kogyo K.K.
Osaka 566 (JP)

• FUNAHASHI, Takashi,
Kanegafuchi Kagaku Kogyo K.K.
Osaka 566 (JP)
• HARA, Kazuhiro,
Kanegafuchi Kagaku Kogyo K.K.
Osaka 566 (JP)
• NOMURA, Takuji,
Kanegafuchi Kagaku Kogyo K.K.
Osaka 566 (JP)
• UEKITA, Masakazu,
Kanegafuchi Kagaku Kogyo K.K.
Osaka 566 (JP)

(74) Representative:
VOSSIUS & PARTNER
Postfach 86 07 67
81634 München (DE)

(54) **WASTES DISPOSING MATERIAL AND METHOD FOR DISPOSING OF WASTES**

(57) The waste-treating material and the method for treating waste to stabilize harmful metals in the waste. The material and the method are particularly effective to alkaline incinerated dust discharged from waste incinerators, which dust is difficult for suppressing the elution of harmful metals by a conventional cement solidification method. According to the invention, the waste treating method comprises the steps of: mixing 3 to 30 wt. parts of the waste-treating material containing as main component at least one selected from the group of an X-ray-analytically amorphous aluminum hydroxide, a porous inorganic adsorbent in a powder form, a water-soluble phosphate, and a water-soluble carbonate with 100 wt. parts of the waste containing at least one harmful metal selected from the group consisting of lead, chromium, copper, and zinc; and kneading the mixture with adding water at need. The treating material and the treating method treat a wide variety of waste including: industrial waste containing harmful heavy metals, industrial waste containing heavy metals discharged from semiconductor plant and plating plant, slurry sludge and dewatering cake sludge discharged from semiconductor plant and plating plant after treatment of various kinds of waste liquids, harmful dust collected for conserving environment of working place of electric furnace and fusion furnace in steel making works, dust generated from municipal waste fusion furnace, and contaminated soil generated at waste landfill site.

**Description**

BACKGROUND OF THE INVENTION

1. Field of the Invention

The present invention relates to a waste-treatment material and a method for treating waste, which are effective for stabilizing harmful heavy metals contained in the waste.

2. Description of the Related Art

Currently about 48 million tons of general waste (as of 1988) and about 310 million tons of industrial waste (as of 1985) are annually discharged in Japan. The quantity of annual discharge rate in 2000 is estimated to reach a level of about 80 million tons for the general waste and about 600 million tons for the industrial waste. Regarding the discharged general waste, about 70% of the total discharged amount are currently incinerated, and about 20% thereof are directly disposed. As for the industrial waste, about 40% are reused, and about 30% thereof are reduced their volume by incineration and other methods before disposed, and about 30% are directly disposed at final treatment sites. Since these incinerated general waste and industrial waste contain large amount of harmful heavy metals, the governmental regulations to the waste treatment have a tendency of becoming significantly severer than ever. The Japanese government enforced a regulation, in April of 1995, that classifies these heavy-metal-laid general and industrial waste as the general waste under special control, and that requires the sufficient suppression of quantity of the heavy metals eluted.

For example, the waste which is treated by municipal waste treatment plants contain color-printed papers, cellophane sheets, and plastics. These papers and cellophane sheets contain cadmium (Cd), lead (Pb), chromium (Cr), mercury (Hg), arsenic (As), and copper (Cu). And the plastics contain cadmium, lead, zinc (Zn), chromium, mercury, and arsenic. When that type of waste is incinerated, the generated ashes contain the above-described heavy metals. A recent tendency in the incineration plants is to collect the incinerated ashes separately, that is, the main ashes consist of burnt residue and the incinerated dust (or simply called as "fly ash") which is collected by a bag filter unit. Both the main ashes and the incinerated dust contain heavy metals, and particularly the incinerated dust likely elute heavy metals. The reason of elution of heavy metals from the incinerated dust is described in the following. At the incineration plants, calcium hydroxide and calcium oxide are charged into the flue gas passage to catch the hydrogen chloride gas generated from the incineration stage. The concentration of hydrogen chloride in the flue gas is decreased by combining the gas with thus charged calcium hydroxide and calcium oxide to yield calcium chloride. The non-reacted calcium hydroxide and calcium oxide are, however, left in the incinerated dust, so that the incinerated dust show a high alkalinity of pH 12 or above. If the incinerated dust contain high concentration of lead, that kind of the incinerated dust elute lead if it is discarded without treatment because lead is converted into water-soluble lead acid salt under a strong alkali condition. To prevent the elution of harmful metals, incineration plants blend the incinerated dust with cement, knead the mixture with adding water, cure to solidify the mixture, then discard it, or blend the incinerated dust with the main ashes to landfill. Since, however, cement is an alkaline material, the simple addition of a large amount of cement to the incinerated dust as in this case cannot suppress the elution of lead. Therefore, the conventional treatment method of simple cement solidification may induce a secondary pollution problem unless the uses of the solidified waste is limited.

Use of chelating agents for the treatment of incinerated dust has been tested. For some kinds of incinerated dust having high alkalinity and high lead concentration, however, the addition of chelating agent as high as six times the weight of the incinerated dust is necessary to suppress the elution of heavy metals not exceeding the regulated level. Generally, that type of chelating agent is expensive accounting for 30 to 50 times that of cement unit price. Accordingly, the use of chelating agents induces a heavy load to running cost.

As described above, conventional methods for stabilizing waste using cement and chelating agents are revealed as difficult in some cases.

Regarding the equipment adopted by incineration plants for blending the incinerated dust with a waste-treating material, many manufacturers commercialized various kinds of blending apparatus with different blending performance. In addition, the same blending apparatus may fail to achieve the sufficient blending depending on the discharge point of the mixture.

Thus, the present state of waste-treating materials and methods for treating waste has problems. Furthermore, there increases the problem of lack of landfill area in Japan. Consequently, the waste-treating material and the method for treating waste have been desired, which can achieve the strong stabilization of harmful heavy metals in the waste with a small amount of the addition of the waste-treating material to prevent re-elution of harmful heavy metals trapped in the waste. In view of the above problems inherent in the conventional waste treatment described above, an object of the present invention is to provide a waste-treating material and a method for treating waste which can stabilize the harmful heavy metals in the waste such as incinerated ashes of municipal waste, slag, soil, sludge, and shredder dust not to re-elute for a long period of time. More specifically, the present invention is directed to provide a waste-treating material and a method for treating waste which can stabilize the harmful heavy metals contained in alkaline incinerated dust discharged from waste incineration furnaces to prevent re-elution thereof.

## SUMMARY OF THE INVENTION

The present inventors made extensive study to solve the above-described problems inherent in a conventional waste treatment, and the waste-treating materials that achieve the object of the invention have been found. As described above, harmful heavy metals such as lead in the waste incinerated dust are likely elute under an alkaline condition. Since calcium hydroxide is charged to a municipal waste incineration furnace to control the amount of hydrogen chloride gas generated during the incineration operation, the incinerated dust generated under an operating condition with calcium hydroxide charge and the incinerated dust collected by an electric precipitator and by a bag filter unit induce particularly high level of lead elution. To cope with the phenomenon, the inventors started from an idea that the elution of heavy metals such as lead is able to be suppressed by combining an amorphous aluminum hydroxide, a porous inorganic adsorbent, a water-soluble phosphate, and a water-soluble carbonate, and thus by removing calcium ion which is an interference substance to induce competitive reactions, and by improving the relative capability of direct reaction with heavy metals such as lead and of adsorption of heavy metals, and at the same time, by bringing the alkaline condition near to a neutral condition. With the actualization of the sequential effects, the inventors completed the present invention. That is, the treating material of the present invention comprises at least one material selected from the group consisting of aluminum hydroxide which has amorphous property in terms of X-ray analysis, porous inorganic adsorbent, water-soluble phosphate, and water-soluble carbonate, as the main component. Among them, a particularly preferable combination is an aluminum hydroxide and a porous inorganic adsorbent, an aluminum hydroxide and a water-soluble phosphate, a porous inorganic adsorbent and a water-soluble carbonate, or a porous inorganic adsorbent and a water-soluble carbonate.

The present invention is described in more detail in the following.

First, the description is made of aluminum hydroxide used in the present invention. The aluminum hydroxide used in the present invention is an amorphous one which does not give a peak in an X-ray analysis. The aluminum hydroxide used in the present invention may contain impurities such as crystalline aluminum hydroxide or nickel. For example, a preferred amorphous aluminum hydroxide is an aluminum sludge which is collected by concentrating aluminum hydroxide discharged from aluminum processing stage in aluminum sash plants because the amorphous aluminum hydroxide source is easy for commercially available at an inexpensive price. In an aluminum sash plant, waste liquids are discharged from a stage for removing oil attached to aluminum form by applying sulfuric acid and a stage for conducting alumite treatment to coat nickel for corrosion proof. Coagulants are added to the waste liquids to treat thereof by the sedimentation filtration, followed by filtration at the plant, thus recovering the aluminum hydroxide in a form of aluminum sludge. Although the recovered aluminum sludge is normally discarded, it can be used as the aluminum hydroxide source of the present invention. Other than the above-described route, amorphous aluminum hydroxide is available in various styles. Nevertheless, the etching waste liquid discharged from the above-described alumite treatment stage, the electrolysis waste liquid, and a waste amorphous aluminum hydroxide generated from neutralization stage of cleaning waste water are preferred sources also in terms of cost because those kinds of waste liquids find no utilization route in industries and have to be discarded.

The use mode of the amorphous aluminum hydroxide generated from the alumite treatment stage described above in the present invention may be slurry, dewatering cake, or dried powder. However, the amorphous aluminum hydroxide in a form of slurry and of dewatering cake contains water as high as about 75% in as-recovered state. Therefore, if the wet amorphous aluminum hydroxide is used as the waste-treating material without further treatment, then the net added amount of aluminum hydroxide to the waste reduces. Accordingly, it is preferable to dry and pulverize the wet amorphous aluminum to prepare a powder in view of treatability of material. The types of applicable drying equipments are many including rotary kiln, spray drier, and shelf-type drier. Any type of the drier is applicable. The drying temperature is, however, preferably to be controlled as not higher than the decomposition temperature of the aluminum hydroxide, or 300°C, more preferably at 250°C or below, and most preferably at 150°C or below because an excessively high temperature induces conversion of aluminum hydroxide to aluminum oxide.

The major function of X-ray-analytically amorphous aluminum hydroxide of the present invention is the pH adjusting function, and an auxiliary function thereof is adsorption function. In a water molecule coordinated to aluminum ion, the electrons are attracted toward the coordination bond, thus the bond of oxygen with hydrogen becomes weak, and hydrogen ion likely generates. Along this process, the proton in the coordinated water dissociates. Compared with crystalline aluminum hydroxide, amorphous aluminum hydroxide has a large opportunity to become porous and to react with solution. As a result, amorphous aluminum hydroxide tends to generate acid and readily neutralize alkali. An alternative mechanism of the function of amorphous aluminum hydroxide is as follows. Since amorphous aluminum hydroxide more easily reacts with alkali than crystalline aluminum hydroxide, it forms aluminate to neutralize alkali. Particularly for the case that the alkali source comes from calcium hydroxide, as seen in a incinerated dust of the municipal waste, aluminum hydroxide along with calcium hydroxide forms precipitate of calcium aluminate, so that the alkali source becomes insoluble, and pH value becomes to a low level. In addition, since the incinerated dust contain a large amount of silicon dioxide as well as calcium, the addition of aluminum hydroxide induces reaction of aluminum, calcium, and silicon dioxide to yield materials having less solubility than calcium hydroxide, which allows to effectively reduces the pH value. When aluminum sulfate, iron sulfide, iron chloride which are usually used as the pH adjuster in the treatment of incinerated dust are applied in a powder form, they often have hydrate water (crystal water) so that the net amount of addition to the incinerated dust decreases. On the contrary, when an amorphous aluminum hydroxide which was dried and pulverized to a powder shape, which was used in the present invention, is added to the waste as a pH adjuster at an equal weight to that of the above-described hydrate-water-laid material, it shows higher alkali neutralization performance and higher pH adjusting function than those of other common pH adjuster described above. In addition, amorphous aluminum hydroxide described above is insoluble to water by itself, and shows a neutralizing function only after reacting with strong alkali. Accordingly, even if the amorphous aluminum hydroxide disperses into water, the pH value of the dispersed liquid remains at near the neutral level. Therefore, when an amorphous aluminum hydroxide is used as the pH adjuster, it does not corrode blending apparatus nor auxiliary apparatuses. On the contrary, when the above-described aluminum sulfate, iron sulfide, iron chloride, sulfuric acid, and phosphoric acid are used, the performance of pH adjustment is expected to give similar effect to that of the amorphous aluminum hydroxide used in the present invention, but they may significantly degrade the life of equipment by corroding the blending apparatus and auxiliary apparatuses because these pH adjusters are often used in liquid state and because these acidic solutions are at a very low pH level. Consequently, the use of amorphous aluminum hydroxide as the material for treating the incinerated dust is also effective in view of the maintenance of facilities.

The following is the detail description of porous inorganic adsorbent used in the present invention. The porous inorganic adsorbent is a polymer consisting of one or more kinds of element other than carbon. Examples of the elements structuring the polymer are silicon, aluminum, magnesium, manganese, iron, and calcium. Examples of compounds of these elements are silicic acid and its salt, or silicon dioxide, aluminum silicate, and magnesium silicate. The porous inorganic adsorbent used in the present invention is in a powder form, and the porosity is preferably expressed by the sum of surface area on total particles included in a unit quantity of powder, or the specific surface area. There are known methods to determine the specific surface area, including gas adsorption method (BET method, Harkins-Jura's relative method), liquid phase adsorption method, immersion heat method (Harkins-Jura's absolute method), and permeation method (Blaine method), which are introduced in published papers (for example, "Illustration of Powder Properties", edited by the Powder Engineering Institute, and the Japan Powder Industry Association.) Individual methods have different measurement principle, and the meaning of the obtained result is not necessarily the same. The specific surface area used in the present invention is determined by the BET surface area method ($N_2$). A preferred porous inorganic material used in the present invention is porous silicon dioxide or porous aluminum silicate from the reason of availability. Known forms of porous silicon dioxide are crystalline and amorphous. Either form is applicable in the present invention if only it is in a powder form. Examples of that type of silicon dioxide are silicic acid obtained from a clay mineral that is prepared by acid treatment of active clay, and synthetic silicic acids such as Karplex BS304 (Shionogi & Co., Ltd.), Karplex BS304F (Shionogi & Co., Ltd.), Karplex #67, #80 (Shionogi & Co., Ltd.). Nevertheless, other types of silicon dioxide are also applicable.

Aluminum silicate is a silicic acid in which a part of silicon elements in silicic acid are substituted by aluminum. Known types of these silicic acids include natural aluminum silicate such as pumice, fly ash, kaolin, bentonite, active clay, diatom earth, and zeolite, and synthesized aluminum silicates. Among them, synthetic aluminum silicates have a wide specific surface area, high lead adsorption capacity, and high alkali adsorption capacity, so that they efficiently stabilize heavy metals such as lead by combined use with an aluminum hydroxide which is a pH adjuster. Kyowado 700 PEL and Kyowado 700 PL (both are produced by Kyowa Kagaku Co, Ltd.) are examples of that type of synthesized aluminum silicate. However, the applicable synthesized aluminum silicates are not limited to these examples.

Since porous aluminum silicate and porous silicon dioxide react with OH ion in an alkaline domain by dissolving the silicic acid component into the solution, and react with calcium hydroxide which is an alkali source, along with aluminum hydroxide, in the incinerated dust, thus bring the calcium hydroxide to insoluble state. Consequently, combined use of a porous aluminum silicate, a porous silicon dioxide, and an aluminum hydroxide effectively decreases pH value of the incinerated dust.

As for the porous inorganic adsorbent, wider specific surface area gives higher adsorption capacity of heavy metals such as lead and higher alkali adsorption capacity. Excessively wide specific surface area, however, results in a bulky adsorbent, which is inconvenient in handling. Accordingly, a preferable specific surface area of the porous inorganic adsorbent used in the present invention is in a range of from 200 $m^2$/g or above to less than 700 g/$m^2$, and particularly for aluminum silicate, a more preferable range is from 400 g/$m^2$ or above to less than 700 g/$m^2$.

The following is the description on the water-soluble phosphate which is used in the present invention. According to the present invention, water-soluble phosphate dissolves when it is mixed with waste and water. In the dissolving step, the harmful metals such as lead eluted from the waste react with phosphoric ion to form an insoluble compound to stabilize the harmful metals. There are various kinds of phosphates applicable to the present invention, including salts of phosphoric acid, hypophosphoric acid, metaphosphoric acid, polyphosphoric acid. In particular, $Na_3PO_4$, $K_3PO_4$, $(NH_4)_3PO_4$, $Na_2HPO_4$, $K_2HPO_4$, $(NH_4)_2HPO_4$, $NaH_2PO_4$, $KH_2PO_4$, $(NH_4)H_2PO_4$ are the typical examples of these phosphates. The treating material of the present invention often treats lead in an alkaline incinerated dust. Lead dissolves into an alkaline solution to a large amount. When, however, the pH value decreases, the solubility of lead decreases. Accordingly, a preferable phosphate is a di-hydrogen phosphate such as $NaH_2PO_4$, $KH_2PO_4$, and $(NH_4)H_2PO_4$ which give acidic property. Among these examples, $KH_2PO_4$ has a strong deliquescence property, and $(NH_4)H_2PO_4$ may generate ammonia under an alkaline condition. Therefore, $NaH_2PO_4$ is most preferable as the phosphate. The pH value obtained by dissolving $NaH_2PO_4$ is higher than that obtained from liquid aluminum sulfate.

Next, the description is made of carbonate used in the present invention. The carbonate applicable to the present invention is powder, aqueous solution, or aqueous suspension. There are various types of carbonate applicable to the present invention, any carbonate may be applicable if it is water-soluble. Examples of the carbonate are carbonate such as $Na_2CO_3$ and $K_2CO_3$, and hydrogen carbonate such as $NaHCO_3$ and $KHCO_3$. However, the main object of the present invention is to fix the calcium ion in the waste and to increase the efficiency of adsorbent. Therefore, any carbonate is applicable if only it is water-soluble. The water-soluble carbonate in the present invention is the one having solubility of 20 g to 100 g of water at 20°C. Among the above-described carbonates, $Na_2CO_3$ and $K_2CO_3$ are preferable from the standpoint of their high solubility, and $K_2CO_3$ is most preferable because it has a significantly high solubility. It should be noted that Table 1 lists the solubility of several kinds of carbonates to water.

Table 1

| Solubility of carbonate (at 20°C) | |
| --- | --- |
| kinds of carbonates | Carbonate Solubility (g/100g) |
| $Na_2CO_3$ | 21.5 |
| $K_2CO_3$ | 111 |
| $NaHCO_3$ | 9.6 |
| $KHCO_3$ | 33.7 |

Above description is made of the function of individual materials for using in the present invention, that is, porous inorganic adsorbent, phosphate, and carbonate. The following is the description on the function of combination of these materials.

By combining an amorphous aluminum hydroxide and a porous inorganic adsorbent, the performance for stabilizing lead, chromium, copper, and zinc increases. The reason of the improvement is presumably the contribution of the porous inorganic adsorbent to the performance of adsorption and pH adjustment. The main function of amorphous aluminum hydroxide is the pH adjustment. On the other hand, porous inorganic adsorbent has the main function of adsorbing lead, zinc, and other metals. If the adsorption function is combined with the function of solid acid, the pH adjustment function appears. Therefore, the combination of an amorphous aluminum hydroxide and a porous inorganic adsorbent should add the function of additional adsorption capacity and the function as solid acid.

The combination of an amorphous aluminum hydroxide with a water-soluble phosphate enhances the stabilizing performance against lead, chromium, copper, and zinc. The reason of the improvement of stabilization is presumably resulted from the addition of the performance to make harmful metals insoluble by the water-soluble phosphate, in particular the addition of calcium catching function. The main function of amorphous aluminum hydroxide is the pH adjustment. On the other hand, the function of phosphate is to convert harmful metals into insoluble phosphates. In addition, calcium ion which causes alkali formation is converted to calcium phosphate which is an insoluble compound. Consequently, the combination of an amorphous aluminum hydroxide with a water-soluble phosphate presumably allows easy pH adjustment, and the water-soluble phosphate makes the harmful metals insoluble.

The mechanism to stabilize harmful metals such as lead by the combination of a porous inorganic adsorbent with a water-soluble carbonate is supposed to remove the causes which hinder the adsorption of harmful metals onto the porous inorganic adsorbent using the function of carbonate. The largest cause of the hindrance of adsorption of harmful metals onto the porous inorganic adsorbent is the presence of calcium ion which comes from soluble calcium salts such as CaO and $CaCl_2$ which exist in the waste at a large amount. Calcium ion generates an adsorption competitive reaction with a harmful metal ion, and hinders the adsorption of the harmful metal ion onto the porous inorganic adsorbent. When the carbonate dissolves into water, it immediately reacts with calcium ion to form insoluble $CaO_3$ and a complex

with calcium. Owing to the behavior, calcium ion is eliminated from the system of waste and treating material, thus the performance of adsorption onto the inorganic adsorbent is relatively improved. In addition, the carbonate forms insoluble compounds and complex salts with harmful metals to stabilize the harmful metals.

There is a similar method to the above-described method for stabilizing harmful metals such as lead by combining a porous inorganic adsorbent with a water-soluble carbonate, which is disclosed in the Japanese Unexamined Patent Publication, No. Hei. 6-15248. The disclosed method has an object to merely support the curing reaction of cement component and to harden the cement, and the method only adds sodium carbonate and other components. To the contrary, the treating material of the present invention is structured from a novel concept of the adsorption of harmful metals by an inorganic adsorbent and of the support of adsorption performance by removing calcium ion. Thus, the present invention is quite different from the above method.

As described initially, according to the present invention, it is particularly preferable to combine at least an aluminum hydroxide and a porous inorganic adsorbent, an aluminum hydroxide and a water-soluble phosphate, a porous inorganic adsorbent and a water-soluble carbonate, a porous inorganic adsorbent and a water-soluble phosphate, or a water-soluble phosphate and a water-soluble carbonate. Common to these combinations, the pH adjustment function of aluminum hydroxide and the function to bring Ca into insoluble state using carbonate are emphasized from the point that, when the waste has an alkaline property, heavy metals becomes easily dissolve. Accordingly, when an alkaline waste is treated, the combined use of the treating material with a high alkaline raw material such as cement is not preferable. That is, the treating material of the present invention inherently differs from other treating materials which blend cement group with chemicals of the present invention.

Therefore, in every combination of components, the amount of alkali in the waste is grasped, and based on the grasped alkali amount, the mixing ratio of individual components and the adding ratio of the treating material to the waste are determined.

The method for determining the alkali amount in the present invention is described below. First, 100 ml of 0.5N hydrochloric acid is added to 1g of waste. The prepared dispersion is shaken at 20°C for 20 hours. Then, 1N sodium hydroxide is added to the shaken dispersion until pH value becomes 7. The added volume of sodium hydroxide at the point of pH 7 is determined as **x** ml. The amount of alkali **y** (m-mole/g) in 1g of waste is expressed by

$$[y = (50 - x)].$$

For example, if a large amount of alkali exists in the waste, the amount of alkali becomes to about 12 to 14 m-mole/g. On the other hand, when alkali exists in the waste at a relatively small amount, the amount of alkali becomes about 5 to 7 m-mole/g. In that case, the alkali amount in the alkaline waste is 5 m-mole/g or more. Therefore, first, the relation between the amount of alkali and the aluminum hydroxide is described. When a large amount of alkali exists in the waste, addition of 20 to 30 wt. parts of amorphous aluminum hydroxide to 100 wt. parts of waste satisfactorily stabilizes lead. On the other hand, when the amount of alkali is relatively small, addition of 3 wt. parts of amorphous aluminum hydroxide satisfactorily stabilizes lead. Accordingly, it is preferable that the mixing ratio is selected to a range of from 3 to 30 wt. parts of amorphous aluminum hydroxide with 100 wt. parts of waste. If necessary, however, larger amount of amorphous aluminum hydroxide may be added.

Next, the mixing ratio of aluminum hydroxide and porous inorganic adsorbent in the treating material is described. The mixing ratio of amorphous aluminum hydroxide and porous adsorbent may be adequately selected depending on the amount of alkali elution in the target waste and on the elution concentration of heavy metals. That is, when the amount of alkali in the waste is large, bipolar compounds such as lead increase their elution amount. Accordingly, increase in the mixing ratio of aluminum hydroxide is effective. If, however, the mixing ratio of amorphous aluminum hydroxide is excessive, the preventive effect to lead elution solely depends on the pH adjustment, so if the pH cannot be decreased to a sufficient level, a large amount of lead is eluted. Generally, the composition of waste fluctuates, and alkalinity also fluctuates. When the alkalinity of the waste is extremely high, sole pH adjustment by aluminum hydroxide cannot suppress the Pb elution. In that case, the mixing ratio of the porous inorganic adsorbent is needed to increase. Accordingly, it is preferable that the mixing ratio of aluminum hydroxide as a pH adjuster in the treating material is 95 wt.% or less. On the other hand, if the mixing ratio of the aluminum hydroxide is too low, the pH value of the waste decreases to make lead ion and other metal ions unstable, which fails to sufficiently draw out the effect for enhancing the adsorption performance of the porous inorganic adsorbent. Therefore, a preferable mixing ratio of amorphous aluminum hydroxide is 20 wt.% or more. As described above, the mixing ratio of aluminum hydroxide in the treating material combining the aluminum hydroxide with a porous adsorbent is equal to or greater than 20 wt.% but less than or equal to 95 wt.%. For further enhancing the effect of adsorption stably, the mixing ratio of aluminum hydroxide is more preferably at 80 wt.% or less.

The following is the description of mixing ratio of aluminum hydroxide and water-soluble phosphate in the treating material. The mixing ratio of amorphous aluminum hydroxide and water-soluble phosphate may be adequately selected depending on the amount of alkali in the target incinerated dust, and on the concentration of eluted heavy metals. That is, as in the case of the combination of aluminum hydroxide and porous inorganic adsorbent, it is preferable that the mixing ratio of aluminum hydroxide is 95 wt.% or less. If the mixing ratio of aluminum hydroxide is too small, the pH value of the waste decreases to bring the lead ion and other metal ions unstable, thus failing to sufficiently draw out the effect for enhancing the insoluble property of harmful metals by the action of water-soluble phosphate. On the other hand, since water-soluble phosphate has a liquescence property, a treating material containing excess amount of phosphate solidifies during storage period, and the treating material may not be able to be discharged from the storage tank of treatment plant. The amorphous aluminum hydroxide included in the treating material of the present invention has an effect to coat the surface of liquescence material such as water-soluble phosphate and to prevent consolidation. Consequently, it is preferable that the mixing ratio of amorphous aluminum hydroxide in the treating material is 20 wt.% or more. As described above, the mixing ratio of aluminum hydroxide in the treating material combining the aluminum hydroxide with a water-soluble phosphate is preferably equal to or greater than 20 wt.% but less than or equal to 95 wt.%. For further enhancing the effect of phosphate, the mixing ratio of aluminum hydroxide is more preferably at 80 wt.% or less.

Next, description is made of the mixing ratio of porous inorganic adsorbent and water-soluble carbonate in treating material. The mixing ratio of carbonate and porous adsorbent in a treating material may be adequately selected to an optimum ratio depending on the eluting amount of calcium from the target incinerated dust. A preferred mixing ratio from the powder handling point of view is described below. Generally, porous adsorbent has a small bulk density (around 0.2 to 0.4 g/cm$^3$ of loose density). Accordingly, excessive content of porous adsorbent in the treating material increases the volume of the treating material, which makes the handling of the treating material difficult. Carbonate gives a supporting function to the adsorption capacity of porous inorganic adsorbent, so that it is essential for a treating material to contain porous inorganic adsorbent to some extent. A treating material which contains excess amount of carbonate consolidates itself during storage period, and it may not be discharged from the storage tank of treatment plant. The porous adsorbent contained in the treating material has an effect to coat the surface of carbonate and prevent consolidation. Therefore, a preferable content of carbonate in a treating material combining a porous adsorbent with a water-soluble carbonate is equal to or greater than 20 wt.% but less than or equal to 80 wt.%.

The following is the description of the mixing ratio of porous inorganic adsorbent and water-soluble phosphate in treating material. The mixing ratio of phosphate and porous adsorbent in a treating material has a similar tendency as in the above-described case. That is, excess amount of porous adsorbent increases the volume of treating material, and results in difficulty for handling thereof. On the other hand, since phosphate has a deliquescence property, a treating material containing excess amount of phosphate consolidates itself during storage period, and may become difficult to be discharged from the storage tank of treatment plant. The porous adsorbent contained in the treating material has an effect to coat the surface of phosphate and prevent consolidation. Therefore, a preferable content of phosphate in a treating material combining a porous adsorbent with a water-soluble phosphate is equal to or greater than 20 wt.% but less than or equal to 80 wt.%.

The description given above disclosed that it is particularly preferable that the treating material of the present invention has at least the combination of an aluminum hydroxide and a porous inorganic adsorbent, an aluminum hydroxide and a water-soluble phosphate, a porous inorganic adsorbent and a water-soluble carbonate, or a porous inorganic adsorbent and a water-soluble phosphate, and also disclosed the preferable mixing ratio of these components in treating material. It is also in the scope of the present invention that three kinds out of the above-given four kinds of components are mixed together as in the case of aluminum hydroxide, porous inorganic adsorbent, and water-soluble phosphate, or the case of aluminum hydroxide, porous inorganic adsorbent, and water-soluble carbonate, and that all these four components are mixed together. Furthermore, it is also in the scope of the present invention that iron sulfide and iron chloride are added to the above-given main components. A low calcium cement such as alumina cement may also be added to the mixing system.

Hereinabove is the description on treating materials for alkaline waste. Some waste show neutral or acidic property. Examples of that kind of waste are municipal incinerated ashes such as: incinerated dust, main ashes, and fused dust; incinerated ashes of industrial waste; shredder dust; sludge which is generated from a waste water treatment and which contains heavy metals; slag; and contaminated soil. For these cases, it is effective to add an alkali additive to make the waste to alkaline state, then to apply the function of above-described aluminum hydroxide, porous adsorbent, and other components. Examples of the alkali additive are water glass, sodium hydroxide, calcium hydroxide, and cement. The applicable cement in the present invention includes Portland cement (types of normal, very quick hardening, moderate fusing heat, anti-sulfate, for example), mixed cement (fly ash, blast furnace ashes, silica, for example), water-hardening cement such as alumina cement, and a cement mixed with gypsum and lime for adjusting pH value.

Next, the following is the method for producing the waste-treating material of the present invention. If individual components of the treating material are in a powder form, they may be mixed in advance, or they may be mixed at the use point. Other components may further be mixed to the treating material, at need. Adding to the main components of treating material described before, other components such as cement and chelating agent may be mixed, or further the waste to be treated may be mixed together. For the mixing operation, method of mixing and order of addition of components are not necessarily specified. In the case that a treating material which was mixed in advance is stored, inclusion of water should be avoided as far as possible.

The following is the description of waste treatment method using the treating material of the present invention. It is preferable that the waste-treating material of the present invention is mixed with the waste containing at least one harmful metal selected from the group consisting of lead, chromium, copper, and zinc, and is kneaded together by adding water, at need.

A preferable form of the waste-treating material is powder from the viewpoint of easy handling. In the case that all components of the treating material are in a powder form, a preferred mode of the present invention is that the waste such as incinerated dust collected into a hopper is mixed with the waste-treating material coming from a separate hopper and that they are sufficiently kneaded in a forming unit by, at need, adding water, to extrude from the forming unit.

The above-described procedure is for the case that all components are in a form of powder. Since amorphous aluminum hydroxide is also available in a form of slurry, aluminum hydroxide may be used as the pre-treating material or post-treating material other than it is added together with other components such as porous adsorbent and water-soluble phosphate. Also for a water-soluble carbonate, since it has 20 (g/100g) or more of solubility, it may be used as the pre-treating material or post-treating material other than it is added together with other components such as amorphous aluminum hydroxide and porous inorganic adsorbent.

Regarding the amount of addition of the treating material to waste, general conventional treating method using cement is to add 10 to 30 wt. parts of cement to 100 wt. parts of waste to knead them together. The range of addition is selected from the reason that the addition of additive over 30 wt. parts is not realistic from the standpoint of volume reduction of waste. The addition of the treating material of the present invention provides superior performance to the case of cement addition at the same adding amount. Accordingly, for example, if the same stabilizing performance on heavy metals with that of cement addition is wanted, then smaller amount of addition of the treating material of the present invention offers the same effect with the cement application while expecting the volume reduction of the solidified product. Conventional cement often fails to obtain sufficient stabilization of heavy metals even when 30 wt. parts of the cement is added to the waste. On the other hand, the addition of the treating material of the present invention at the same amount with cement provides stronger stabilization effect to heavy metals. A preferable amount of addition of the treating material of the present invention to incinerated dust is 30 wt. parts or less from the standpoint of volume reduction of waste. Since an incineration plant gives fluctuation in content of harmful metals such as lead in the incinerated dust, it is preferred to add 3 wt. parts or more of the treating material to the waste from the view point of assurance of stable effect of the treating material. In the case that aluminum hydroxide or water-soluble carbonate is used as the pre-treating material or post-treating material, the amount of addition is preferably 3 wt. parts or more from the view point of assurance of stable effect of the treating material. From the standpoint of volume reduction of waste, the total amount of addition of treating material is limited to 30 wt. parts or less, so it is preferable that the amount of addition of pre-treating material or post- treating material is 27 wt. parts or less.

As described above, according to the present invention, waste and treating material are kneaded together. Since the kneaded mixture improves the performance to stabilize harmful metals by solidifying the mixture after several days or several weeks of curing, it is preferable to cure the kneaded mixture to solidify.

Hereinabove is the description on treating materials for alkaline waste. Some waste show neutral or acidic property. Examples of that kind of waste are municipal incinerated ashes such as: incinerated dust, main ashes, and fused dust; incinerated ashes of industrial waste; shredder dust; sludge which is generated from waste water treatment stage and which contains heavy metals; slag; and contaminated soil. The amount of alkali in these types of waste is approximately less than 5 m-mole per 1 g of waste. For that type of waste, application of sole aluminum hydroxide is not effective. In that case, a preferable method is that at least one of water glass, sodium hydroxide, calcium hydroxide, and cement, as the alkali additive, is preliminarily mixed with an X-ray-analytically amorphous aluminum hydroxide, or is separately added to the waste, and that they are kneaded together while adding, at need, water. That is, when waste which contains less than 5 m-mole of alkali per 1 g of waste and which contains at least one harmful metal selected from the group consisting of lead, chromium, copper, and zinc is treated, a method which is also in the scope of the present invention is that at least one of water glass, sodium hydroxide, calcium hydroxide, and cement is added as the alkali additive to the waste along with an X-ray-analytically amorphous aluminum hydroxide and a porous inorganic adsorbent and that these components are mixed together while adding water, at need, to knead and that thus kneaded mixture is cured to solidify. The curing to solidify the kneaded mixture as described above is preferable because the curing and the solidification improve the stability of harmful metals.

Preferred waste to which the treating material and method for treating waste of the present invention are applicable includes incinerated ashes, slag, soil, and sludge. Incinerated ashes include main ashes and incinerated dust. The incinerated dust is a collection of powdery dust which is generated from incineration of municipal waste and industrial waste and a collection of dust generated from melting furnace. Examples of that type of dust are EP ashes collected by electric precipitators and bag ashes collected by bag filter units. Thus collected incinerated dust, particularly the incinerated dust having high alkalinity is a target of the present invention. Examples of the target incinerated dust having high alkalinity are the incinerated dust subjected to the injection of JIS Special Grade incinerated ashes, calcium hydroxide having high specific surface area such as Tamacalc (produced by Okutama Kogyo Co., Ltd.), calcium hydroxide including harmful metal removal material such as Solbalit (produced by Ryoko Sekkai Kogyo Co., Ltd.), and a material consisting mainly of calcium silicate such as Sunpulfer (produced by Asahi Chemical Industry Co., Ltd.) to remove hydrogen chloride gas. The amount of alkali in these incinerated dust is at around 5 m-mole or more per 1 g of incinerated dust. On the other hand, the main ashes are ashes discharged from the bottom of incineration furnaces at plants for incinerating municipal waste and industrial waste. Among these various kinds of main ashes, the one containing harmful heavy metals is a target waste of the present invention. Furthermore, the present invention also targets slag which is discharged from mines, and sludge which contains heavy metals and which is generated from a process for stabilizing heavy metals in soil contaminated by heavy metal and other materials and which is generated from waste water treatment process. Some waste show neutral or acidic property. Examples of that kind of waste are municipal incinerated ashes such as: incinerated dust, main ashes, and fused dust; incinerated ashes of industrial waste; shredder dust; sludge which is generated from waste water treatment and which contains heavy metals; slag; and contaminated soil. The amount of alkali in these types of waste is approximately 5 m-mole per 1 g of waste. For that type of waste showing neutral or acidic property, addition of alkali additive allows to apply the treating material and the treating method of the present invention, as described before.

PREFERRED EMBODIMENTS OF THE INVENTION

The present invention is described in more detail in the following referring to embodiments. While the present invention is described with reference to specific embodiments, the present invention is not limited to these embodiments.

Example 1

An aluminum hydroxide slurry waste generated from an alumite processing stage of aluminum processing plant was dewatered, and dried at 150°C of material temperature. The dried material was powdered to prepare an amorphous aluminum hydroxide. The chemical analysis of the amorphous aluminum hydroxide is given in Table 2.

## Table 2: Chemical analysis of amorphous aluminum hydroxide

| Analytical item | Content (wt.%) | Content (mg/kg-dry) | Analytical method |
|---|---|---|---|
| Al | 26 | | Wet decomposition, followed by ICP emission spectral analysis |
| Pb | | >20 | |
| Cd | | >10 | |
| T-Cr | | 19 | |
| $Cr^{6+}$ | | >1 | |
| Zn | | 33 | |
| Cu | | 56 | |
| Ni | | 3100 | |
| Na | | 7300 | Wet decomposition, followed by atomic adsorption spectrochemical analysis |
| Hg | | 0.089 | |
| As | | >0.5 | |
| CN | | >0.1 | Testing method based on the modification of the Regulation on Bottom Material Survey Notification No.127 (1988) of the Water Quality Bureau of the Environment Agency |
| Water content | 5.4% | | Sewage testing method |

**Note: T-Cr: Total Cr**

Each 30 g aliquot of the three kinds of dust which contained a large amount of Pb and which were discharged from municipal waste incineration plants was separately mixed with the above-described amorphous aluminum hydroxide (treating material 1) and 18 g of water (accounting for 60 wt. parts) at a ratio given in Table 3 to knead them together, and the kneaded mixture was cured at 20°C for 1 day or 9 days to solidify. The three kinds of dust were the following. The dust A showed 450 mg/L of Pb elution, pH 12.41, and 14.3 m-mole of alkali amount per 1 g of waste, which values were etermined in a non-treated state conforming to the testing method per Notification No.13 of the Environmental Agency. The dust B showed 49 mg/L of Pb elution, pH 12.80, and 10.0 m-mole of alkali amount per 1 g of waste, which values were determined in a non-treated state conforming to the testing method per Notification No.13 of the Environmental Agency. The dust C showed 490 mg/L of Pb elution, pH 12.27, and 7.3 m-mole of alkali amount per 1 g of waste, which values were determined in a non-treated state conforming to the testing method per Notification No.13 of the Environmental Agency. To check the non-harmful property of these waste treated by the treating materials, the lead elution test conforming to the testing method per Notification No.13 was applied. The test condition and test result are summarized in Table 3. Table 3 also lists the amount of lead elution of the tested dust A through C in non-treated state.

Table 3

| Result of elution test | | | | | | |
|---|---|---|---|---|---|---|
| Example No. | Kind of dust | Treating material applied | treating material (wt. parts) | Number of curing days | Amount of lead elution (mg/L) | Ph(-) |
| Example 1-1 | A | 1 | 10 | 1 day | 150 | 12.28 |
| Example 1-2 | A | 1 | 15 | 1 day | 120 | 12.20 |
| Example 1-3 | A | 1 | 20 | 1 day | 0.26 | 11.39 |
| Example 1-4 | A | 1 | 30 | 1 day | 0.13 | 10.88 |
| Comparative Example 1-1 | A | Not-treated | - | - | 450 | 12.41 |
| Example 1-5 | B | 1 | 10 | 9 days | 35 | 12.32 |
| Example 1-6 | B | 1 | 15 | 9 days | 3.4 | 12.09 |
| Example 1-7 | B | 1 | 20 | 9 days | <0.1 | 11.41 |
| Comparative Example 1-2 | B | Not-treated | - | - | 49 | 12.80 |
| Example 1-8 | C | 1 | 3 | 9 days | 0.11 | 9.96 |
| Example 1-9 | C | 1 | 6 | 9 days | <0.1 | 9.64 |
| Example 1-10 | C | 1 | 10 | 9 days | <0.1 | 9.46 |
| Comparative Example 1-3 | C | Not-treated | - | - | 490 | 12.37 |

The test result given in Table 3 indicates that, when the amount of addition of amorphous aluminum hydroxide against the dust increases, the amount of lead elution significantly reduces compared with that in the non-treated state from a certain adding level, and further increase in the adding amount of amorphous aluminum hydroxide decreases the amount of lead elution to at or below the regulation value (0.3 mg/L) of incinerated dust. The amount of addition of amorphous aluminum hydroxide to decrease the amount of lead elution to at or below the regulation value (0.3 mg/L) of incinerated dust is affected by the amount of alkali in the dust, and less alkali amount needs less adding amount of amorphous aluminum hydroxide. For example, for waste containing 7.3 m-mole/g of alkali, (the dust C), the addition of 3 wt. parts or more of amorphous aluminum hydroxide can decrease the amount of lead elution to at or below the regulation value (0.3 mg/L) of the incinerated dust.

<u>Example 2</u>

An acid clay was treated by sulfuric acid at an elevated temperature, and was thoroughly washed to prepare a porous silicon dioxide (having 250 $m^2$/g of specific surface area). The chemical analysis of the silicon dioxide is given in Table 4. The chemical analysis conformed to JIS M8855 (Analytical method of agalmatolite).

Table 4

| Chemical analysis of porous silicon dioxide | |
|---|---|
| Analytical item | Content (wt.%) |
| $SiO_2$ | 92.12 |
| $Al_2O_3$ | 1.27 |
| $Fe_2O_3$ | 0.12 |
| CaO | 0.27 |

**EP 0 845 306 A1**

Table 4 (continued)

| Chemical analysis of porous silicon dioxide | |
|---|---|
| Analytical item | Content (wt.%) |
| MgO | 0.07 |
| $Na_2O$ | 0.47 |
| $K_2O$ | 0.72 |

Thus prepared porous silicon dioxide (250 $m^2$/g of specific surface area) was mixed with the powder of amorphous aluminum hydroxide which was an aliquot of that used in Example 1 at various mixing ratios, and the waste-treating materials 2 of the present invention shown in Table 5 were obtained.

Table 5

| Composition of treating material | | |
|---|---|---|
| Treating material No. | Amorphous aluminum hydroxide (wt.%) | Porous silicon dioxide (wt.%) |
| Treating material 2 | 20 | 80 |
| Comparative material 2-1 | 100 | 0 |
| Comparative material 2-2 | 0 | 100 |

An aliquot of 30 g (100 wt. parts) of the dust C which contained a large amount of lead and which was discharged from a municipal waste incineration plant (giving 490 mg/L of Pb elution, pH 12.37, and 7.3 m-mole of alkali amount per 1 g of waste, which values were determined in a non-treated state conforming to the testing method per Notification No.13 of the Environmental Agency) was mixed with 0.9 g (3 wt. parts) of the above-described treating material powder (treating material 2) and 18 g (60 wt. parts) of water to knead them together. The kneaded mixture was cured at 20°C for 1 day to solidify. To check the non-harmful property of these waste treated by the treating materials, the lead elution test conforming to the testing method per Notification No.13 was applied. The test result is given in Table 6. Table 6 also shows the amount of lead elution for the comparative examples: Comparative Example 2- 1 wherein the sole amorphous aluminum hydroxide above-described was added as the comparative material at a rate of 3 wt. parts; and Comparative Example 2-2 wherein sole porous silicon dioxide was added as the comparative material at a rate of 3 wt. parts. Table 6 adds the amount of lead elution of the tested dust C in non-treated state.

Table 6

| Result of elution test | | | | | | |
|---|---|---|---|---|---|---|
| Example No. | Kind of dust | Treating material applied | Added amount of treating material (wt. parts) | Number of curing days | Amount of lead elution | pH (-) |
| Example 2-1 | C | Treating material2 | 3 | 1 day | 0.24 | 10.73 |
| Comparative Example 2-1 | C | Comparative treating material 2-1 | 3 | 1 day | 1.3 | 10.83 |
| Comparative Example 2-2 | C | Comparative treating material 2-2 | 3 | 1 day | 47 | 12.20 |
| Comparative Example 2-3 | C | Not-treated | - | - | 490 | 12.37 |

The test result given in Table 6 indicates that, when amorphous aluminum hydroxide and porous silicon dioxide are used simultaneously, the amount of addition of the treating material as small as 3 wt. parts decreases the amount of lead elution to or below the regulation value (0.3 mg/L) of incinerated dust. The result also indicates that the simultaneous use of amorphous aluminum hydroxide as a pH adjuster and porous silicon dioxide drastically improves the stabilization of lead than sole use of amorphous aluminum hydroxide which is a pH adjuster. Furthermore, the simultaneous use of amorphous aluminum hydroxide and porous silicon dioxide improves the ability to decrease pH value. For the comparative material 2-2 which did not use amorphous aluminum hydroxide simultaneously, the pH lead elution amount was extremely high. As for the dust C, when sole amorphous aluminum hydroxide was used, the amount of lead elution was 1.3 mg/L under a curing for 1 day as in the case of Comparative Example 2-2, and the amount of lead elution became below the regulated value (0.3 mg/L) under a curing for 9 days as in the case of Example 1-8 seen in Table 3. Accordingly, to actualize the function of amorphous aluminum hydroxide for pH adjusting, an increase of number of curing days to some extent is necessary.

Example 3

An aliquot of amorphous aluminum hydroxide powder used in Example 1, and an aliquot of porous silicon dioxide ($250 \ m^2/g$ of specific surface area) used in Example 2 or a porous synthetic aluminum silicate (Kyowado PEL700, prepared by Kyowa Kagaku Co., Ltd., $500 \ m^2/g$ of specific surface area) were mixed at a ratio given in Table 7 to prepare the waste-treating materials (treating materials 3-1 and 3-2) of the present invention. Comparative material 3 was also prepared using sole amorphous aluminum hydroxide.

Table 7

| Composition of treating material | | | |
|---|---|---|---|
| Treating material No. | Amorphous aluminum hydroxide (wt.%) | Porous silicon dioxide (wt.%) | Porous aluminum silicate (wt.%) |
| Treating material 3-1 | 50 | 50 | 0 |
| Treating material 3-2 | 70 | 0 | 30 |
| Comparative material 3 | 100 | 0 | 0 |

Each 30 g (100 wt. parts) of the two kinds of dust (dust D and dust E) which contained a large amount of lead and which were discharged from a municipal waste incineration plant was separately mixed with the above-described treating material powders (treating material 3-1 and treating material 3-2) at a rate of 2.4 g (8 wt. parts) or 4.5 g (15 wt. parts), and further with 18 g (60 wt. parts) of water to knead all of them together, and the kneaded mixture was cured at 20°C for 4 days or 7 days to solidify. The two kinds of dust were the following. The dust D showed 33 mg/L of Pb elution, pH 12.54, which values were determined in a non-treated state conforming to the testing method per Notification No.13 of the Environmental Agency. The dust E showed 100 mg/L of Pb elution, pH 12.02, which values were determined in a non-treated state conforming to the testing method per Notification No.13 of the Environmental Agency. To check the non-harmful property of these waste treated by the treating materials, the lead elution test conforming to the testing method per Notification No.13 was applied. The test result is summarized in Table 8. Table 8 also shows the result of Comparative Examples using sole amorphous aluminum hydroxide described above as the comparative material at a rate of 8 wt. parts or 15 wt. parts. Table 8 lists the amount of lead elution of the tested dust D and E in non-treated state.

Table 8

| | Kind of dust | Treating material applied | Added amount of treating material (wt. parts) | Number of curing days | Amount of lead elution | pH (-) |
|---|---|---|---|---|---|---|
| Result of elution test | | | | | | |
| Example 3-1 | D | Treating material 3-1 | 8 | 4 | 0.71 | 12.13 |

Table 8 (continued)

| | Kind of dust | Treating material applied | Added amount of treating material (wt. parts) | Number of curing days | Amount of lead elution | pH (-) |
|---|---|---|---|---|---|---|
| Result of elution test | | | | | | |
| Example 3-2 | D | Treating material 3-1 | 15 | 4 | 0.25 | 11.70 |
| Comparative Example 3-1 | D | Comparative material 3 | 8 | 4 | 5.8 | 12.15 |
| Comparative Example 3-2 | D | Comparative material 3 | 15 | 4 | 1.2 | 11.50 |
| Comparative Example 3-3 | D | Not-treated | - | - | 33 | 12.54 |
| Example 3-3 | E | Treating material 3-1 | 15 | 7 | 0.36 | 11.65 |
| Comparative Example 3-4 | E | Treating material 3-2 | 15 | 7 | 0.12 | 11.39 |
| Comparative Example 3-5 | E | Comparative material 3 | 15 | 7 | 23 | 11.95 |
| Comparative Example 3-6 | E | Not-treated | - | - | 100 | 12.02 |

The result given in Table 8 indicates that the simultaneous use of amorphous aluminum hydroxide with porous silicon dioxide or porous aluminum silicate drastically improves the stabilization of lead than sole use of an amorphous aluminum hydroxide which is a pH adjuster. In addition, the simultaneous use of amorphous aluminum hydroxide with porous silicon dioxide or porous silicon dioxide improves the ability to decrease pH value. Furthermore, when amorphous aluminum hydroxide and porous aluminum silicate were used simultaneously, the addition of 15 wt. parts successfully reduced the amount of lead elution to below the regulation value (0.3 mg/L).

Example 4

An aliquot of amorphous aluminum hydroxide powder used in Example 1, and an aliquot of porous silicon dioxide ($250 \text{ m}^2$/g of specific surface area) used in Example 2 or a porous synthetic aluminum silicate (Kyowado PEL700, made by Kyowa Kagaku Co., Ltd., $500 \text{ m}^2$/g of specific surface area) were mixed at a ratio given in Table 9 to prepare the waste-treating materials (treating materials 4-1 and 4-2) of the present invention. Comparative materials 4-1 and 4-2 were also prepared using aluminum sulfate (18 hydrate) instead of amorphous aluminum hydroxide.

Table 9

| Treating material No. | Amorphous aluminum hydroxide (wt.%) | Porous silicon dioxide (wt.%) | Porous aluminum silicate (wt.%) | Aluminum sulfate (18hydrate)(wt.%) |
|---|---|---|---|---|
| Composition of treating material | | | | |
| Treating material 4-1 | 50 | 50 | 0 | 0 |
| Treating material 4-2 | 70 | 0 | 30 | 0 |
| Comparative material 4-1 | 0 | 50 | 0 | 50 |
| Comparative material 4-2 | 0 | 0 | 30 | 70 |

An aliquot of 30 g (100 wt. parts) of the dust F which contained a large amount of lead and which was discharged from a municipal waste incineration plant was mixed with the above-described treating material powder at a rate of 4.5 g (15 wt. parts), and further with 18 g (60 wt. parts) of water to knead all of them together, and was cured at 20°C for 7 days to solidify. The dust F showed 130 mg/L of Pb elution, pH 12.48, which values were determined in a non- treated state conforming to the testing method per Notification No.13 of the Environmental Agency. To check the non-harmful property of the waste treated by the treating materials, the lead elution test conforming to the testing method per Notification No.13 was applied. The test result is summarized in Table 10. Table 10 also shows the amount of lead elution of the tested dust F in non-treated state.

Table 10

| Result of elution test | | | | |
|---|---|---|---|---|
| Example No. | Treating material applied | Added amount of treating material (wt. parts) | Amount of lead elution | pH (-) |
| Example 4-1 | Treating material 4-1 | 15 | 1.3 | 11.99 |
| Example 4-2 | Treating material 4-1 | 15 | 0.49 | 11.74 |
| Comparative Example 4-1 | Comparative material 4-1 | 15 | 2.1 | 12.48 |
| Comparative Example 4-2 | Comparative material 4-2 | 15 | 1.2 | 11.76 |
| Comparative Example 4-3 | Not-treated | - | 130 | 12.48 |

The result shown in Table 10 indicates that aluminum hydroxide has greater performance for stabilizing lead than aluminum sulfate which is commonly used as a pH adjuster in dust treatment process. The reason of the phenomenon is presumably the following. Aluminum sulfate is a 18 hydrate salt so that the net weight of aluminum sulfate reduces to half the added amount. Therefore, for charging a specified weight, simultaneous use of amorphous aluminum hydroxide with porous silicon dioxide or porous aluminum silicate effectively decreases the pH value and improves the ability for stabilizing lead than the simultaneous use of aluminum sulfate (18 hydrate) with porous silicon dioxide or porous aluminum silicate.

Example 5

An aliquot of amorphous aluminum hydroxide powder used in Example 1, and an aliquot of porous silicon dioxide (250 m$^2$/g of specific surface area) used in Example 2 were mixed at a ratio given in Table 11 to prepare the waste-treating materials (treating materials 5-1 through 5-3) of the present invention.

Table 11

| Composition of treating material | | |
|---|---|---|
| Treating material No. | Amorphous aluminum hydroxide (wt.%) | Porous silicon dioxide (wt.%) |
| Treating material 5-1 | 20 | 80 |
| Treating material 5-2 | 80 | 20 |
| Treating material 5-3 | 95 | 5 |
| Comparative material 5 | 100 | 0 |

An aliquot of 30 g (100 wt. parts) of the dust G which contained a large amount of lead, which was subjected to injection of large amount of calcium hydroxide, and which was discharged from a municipal waste incineration plant was mixed with the above-described treating material powders at a rate of 6 g (20 wt. parts), and further with 18 g (60 wt. parts) of water to knead all of them together, and was cured at 20°C for 7 days to solidify. The dust G showed 320 mg/L of Pb elution, pH 12.08, which values were determined in a non-treated state conforming to the testing method per Notification No.13 of the Environmental Agency. To check the non-harmful property of the waste treated by the treating materials, the lead elution test conforming to the testing method per Notification No.13 was applied. The test result is summarized in Table 12. Table 12 also shows the amount of lead elution of the tested dust G applied in non-treated state.

Table 12

| Result of elution test | | | | |
|---|---|---|---|---|
| Example No. | Treating material applied | Added amount of treating material (wt. parts) | Amount of lead elution (mg/L) | pH (-) |
| Example 5-1 | Treating material5-1 | 20 | <0.1 | 10.62 |
| Example 5-2 | Treating material5-2 | 20 | <0.1 | 10.68 |
| Example 5-3 | Treating material5-3 | 20 | <0.1 | 10.48 |
| Comparative Example 5-1 | Comparative material5 | 20 | 0.27 | 11.07 |
| Comparative Example 5-2 | Not-treated | - | 320 | 12.08 |

The result shown in Table 12 indicates that, even for a dust which elutes as large as 320 mg/L of Pb, the addition of the treating materials reduces the Pb elution to below the detection limit (< 0.1 mg/L) by reducing pH value and by adsorbing Pb.

Example 6

Two kinds of aluminum slurry waste (25% and 16% of solid content, respectively) generated from an alumite processing stage, and an amorphous aluminum hydroxide which was prepared from the above-described slurry by dewatering and powdering (refer to Table 13) were used as the pre- treating materials. An aliquot of porous silicon dioxide (250 $m^2$/g of specific surface area) used in Example 2 was applied as the treating material.

Table 13

| Kinds of pre-treating material | | |
|---|---|---|
| Pre-treating material No. | Material | Solid content (%) |
| Pre-treating material 6-1 | Aluminum hydroxide slurry | 25 |
| Pre-treating material 6-2 | Aluminum hydroxide slurry | 16 |
| Pre-treating material 6-3 | Aluminum hydroxide powder | 100 |

An aliquot of 30 g (100 wt. parts) of the dust H which contained a large amount of lead, which was subjected to injection of a large amount of calcium hydroxide, and which was discharged from a municipal waste incineration plant was mixed with a specified amount of the above-described treating material powders, and further with water to knead them together, and was further kneaded by adding the treating material. The dust H showed 280 mg/L of Pb elution, pH 12.29, which values were determined in a non-treated state conforming to the testing method per Notification No.13 of the Environmental Agency. After cured at 20°C for 1 day to solidify, the non-harmful property of the waste treated by the treating materials was checked applying the lead elution test conforming to the testing method per Notification No.13. The test condition is shown in Table 14, and the test result is summarized in Table 15.

Table 14

| Test condition | | | | | |
|---|---|---|---|---|---|
| Example No. | Pre-treating material | Added amount of pre-treating material (wt. parts) | Added amount of water (wt. parts) | Treating material | Added amount of treating material (wt. parts) |
| Example 6-1 | Pre-treating material 6-1 | 100 | 50 | Porous silicon dioxide | 5 |
| Example 6-2 | Pre-treating material 6-2 | 150 | 0 | Porous silicon dioxide | 5 |
| Example 6-3 | Pre-treating material 6-3 | 20 | 50 | Porous silicon dioxide | 5 |
| Comparative Example 6-1 | - | - | 50 | Porous silicon dioxide | 5 |

Table 15

| Result of elution test | | |
|---|---|---|
| Example No. | Amount of lead elution | pH (-) |
| Example 6-1 | <0.1 | 10.71 |
| Example 6-2 | <0.1 | 10.86 |
| Example 6-3 | 0.15 | 11.70 |
| Comparative Example 6-1 | 18 | 12.15 |

The result shown in Table 15 indicates that the use of slurry and powder of amorphous aluminum hydroxide as the pre-treating material, followed by adding porous adsorbent can reduce the Pb elution at or below the regulation value (0.3 mg/L).

Example 7

A porous synthetic aluminum silicate (Kyowado PEL700, made by Kyowa Kagaku Co., Ltd., 500 $m^2$/g of specific surface area) was used as the treating material, and the amorphous aluminum hydroxides prepared from two kinds of aluminum hydroxide slurry waste (solid content of 25% and 16%) generated from alumite processing stage and prepared from the above-described slurry by dewatering and drying to form powder as the post-treating material (refer to Table 16).

Table 16

| Kinds of pre-treating material | | |
|---|---|---|
| Post-treating material No. | Material | Solid content |
| Post-treating material 7-1 | Aluminum hydroxide slurry | 25 |
| Post-treating material 7-2 | Aluminum hydroxide slurry | 16 |
| Post-treating material 7-3 | Aluminum hydroxide powder | 100 |

An aliquot of 30 g (100 wt. parts) of the dust C which contained a large amount of lead and which was discharged from a municipal waste incineration plant was mixed with 10 wt. parts of the treating material, and further 60 wt. parts of water was mixed to knead them together, and the kneaded mixture was further kneaded by adding a specified amount of treating material. The dust C showed 490 mg/L of Pb elution, pH 12.37, which values were determined in a non-treated state conforming to the testing method per Notification No.13 of the Environmental Agency. After cured at 20°C for 1 day to solidify, the non-harmful property of the waste treated by the treating materials was checked applying the lead elution test conforming to the testing method per Notification No.13. The test condition is shown in Table 17, and the test result is summarized in Table 18.

Table 17

| Test condition | | | | | |
|---|---|---|---|---|---|
| Example No. | Treating material | Added amount of treating material (wt. parts) | Added amount of water (wt. parts) | Post-treating material | Added amount of post-treating material (wt. parts) |
| Example 7-1 | Porous aluminum silicate | 10 | 30 | Post-treating material7-1 | 40 |
| Example 7-2 | Porous aluminum silicate | 10 | 0 | Post-treating material7-2 | 60 |
| Example 7-3 | Porous aluminum silicate | 10 | 60 | Post-treating material7-2 | 10 |
| Comparative Example 7-1 | Porous aluminum silicate | 10 | 60 | - | - |

Table 18

| Result of elution test | | |
|---|---|---|
| Example No. | Amount of lead elution | pH (-) |
| Example 7-1 | 0.15 | 11.38 |
| Example7-2 | 0.20 | 11.43 |
| Example 7-3 | 0.28 | 11.53 |
| Comparative Example 7-1 | 12 | 12.04 |

The result shown in Table 18 indicates that the use of slurry and powder of amorphous aluminum hydroxide as the post-treating material after the treatment of the dust by adding porous adsorbent can reduce the Pb elution to or below the regulation value (0.3 mg/L).

Example 8

An amorphous aluminum hydroxide prepared from an amorphous aluminum hydroxide slurry generated from alumite processing stage by dewatering, drying to form powder, and $NaH_2PO_4$ (anhydride, produced by Wako Pure Chemical Industries, Ltd.) were mixed together to obtain the waste-treating material (treating material 8) of the present invention. A comparative material was prepared consisting only of amorphous aluminum hydroxide.

Table 19

| Composition of treating material | | |
|---|---|---|
| Treating material No. | Amorphous aluminum hydroxide (wt.%) | $NaH_2PO_4$ (wt.%) |
| Treating material 8 | 65 | 35 |
| Comparative material 8 | 100 | 0 |

An aliquot of 30 g (100 wt. parts) of the dust I which contained a large amount of lead, which was subjected to injection of a large amount of calcium hydroxide, and which was discharged from a municipal waste incineration plant was mixed with 6 g (20 wt. parts) of the above-described treating material, and further with 18 g (60 wt. parts) of water to knead them together at 20°C for 1 day to cure and solidify. The dust H showed 450 mg/L of Pb elution, pH 11.91, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 20. Table 20 also shows Comparative Example 8-2 in which solely amorphous aluminum hydroxide (comparative material 8) was added at a rate of 6 g (20 wt. parts).

Table 20

| Lead elution test result | | | | |
|---|---|---|---|---|
| Example No. | Treating material | Added amount of treating material (wt. parts) | Amount of lead elution (mg/L) | pH (-) |
| Example 8-1 | Treating material 8 | 20 | 0.22 | 11.31 |
| Comparative Example 8-1 | Comparative material 8 | 20 | 6.3 | 11.25 |
| Comparative Example 8-2 | Not-treated | - | 450 | 11.91 |

The result shown in Table 20 indicates that the simultaneous use of amorphous aluminum hydroxide with $NaH_2PO_4$ is superior to the sole use of amorphous aluminum hydroxide in the ability to stabilize lead. As seen in the table, the simultaneous use decreased the amount of lead elution below the regulation value (0.3 mg/L) in spite of the high amount of lead elution (450 mg/L) in non-treated state.

Example 9

An aliquot of 50 wt. parts of porous silicon dioxide (250 $m^2$/g of specific surface area) used in Example 2 was mixed with 50 wt. parts of various kinds of carbonate (anhydride, produced by Wako Pure Chemical Industries, Ltd.) to prepare the waste-treating materials (treating material 9-1, treating material 9-2) of the present invention shown in Table 21. Also the treating materials (treating material 9- 3, treating material 9-4) which used carbonate in liquid phase were prepared.

Table 21

| Composition of treating material | | | | |
|---|---|---|---|---|
| Treating material No. | Amount of porous silicon dioxide in treating material (wt.%) | Amount of carbonate in treating material (wt.%) | Kind of carbonate | Form of added carbonate |
| Treating material 9-1 | 50 | 50 | $Na_2Co_3$ | powder |
| Treating material 9-2 | 50 | 50 | $NaHCO_3$ | powder |
| Treating material 9-3 | 50 | 50 | $Na_2CO_3$ | solution |

Table 21 (continued)

| Composition of treating material | | | | |
|---|---|---|---|---|
| Treating material No. | Amount of porous silicon dioxide in treating material (wt.%) | Amount of carbonate in treating material (wt.%) | Kind of carbonate | Form of added carbonate |
| Treating material 9-4 | 50 | 50 | NaHCO$_3$ | solution (dispersion) |

An aliquot of 30 g of the dust J which contained a large amount of lead, which was subjected to injection of a large amount of calcium hydroxide, and which was discharged from a municipal waste incineration plant was mixed with 6 g (20 wt. parts) of the above-described treating material powder (treating materials 9-1 and 9-2), and with 18 g of water to knead them together at 20°C for 1 day to cure and solidify. The dust J showed 94 mg/L of Pb elution, which value was determined in a non-treated state conforming to the testing method per Notification No.13 of the Environmental Agency. In the case that the treating materials 9-3 and 9-4 were used, 3g of porous silicon dioxide was fully mixed with the dust, then the mixture was kneaded with a carbonate which was dissolved or dispersed into 18 g of water, and the kneaded mixture was cured at 20°C for 1 day to solidify. To check the non-harmful property of the waste treated by the treating materials, the lead elution test was given conforming to the testing method per Notification No.13. The test result is shown in Table 22. Table 22 also shows the amount of lead elution in comparative examples in which 3 g of porous silicon dioxide was added (3 g is the same amount of porous silicon dioxide in the treating material). Table 22 contains the amount of lead elution under sole water-kneading treatment, and the amount of lead elution from the dust J in non-treated state.

Table 22

| Elution test result | | | | |
|---|---|---|---|---|
| Example No. | Treating material | Amount of lead elution (mg/L) | Amount of Ca elution (mg/L) | pH (-) |
| Example 9-1 | Treating material 9-1 | 0.88 | 4200 | 12.33 |
| Example 9-2 | Treating material 9-2 | 1.0 | 5200 | 12.29 |
| Example 9-3 | Treating material 9-3 | 0.63 | 3400 | 12.41 |
| Example 9-4 | Treating material 9-4 | 0.89 | 4600 | 12.33 |
| Comparative Example 9-1 | Silicon dioxide | 2.4 | 6700 | 12.40 |
| Comparative Example 9-2 | solely water kneading | 36 | 7300 | 12.45 |
| Comparative Example 9-3 | Not-treated | 94 | | 12.40 |

The result sown in Table 22 indicates that, when a carbonate is added to the porous silicon dioxide for treating waste, the effect of lead stabilization of the porous silicon dioxide is enhanced. The result also suggests that Na$_2$CO$_3$ which has higher solubility gives stronger effect than NaHCO$_3$. From the table, it is understood that the amount of elution of lead closely relates to the amount of elution of calcium ion and that the effect of addition of carbonate in the treating materials is to reduce the calcium ion concentration as described before.

Example 10

An aliquot of 50 wt. parts of porous silicon dioxide (250 m$^2$/g of specific surface area) used in Example 2 was mixed with 50 wt. parts of various kinds of carbonates (anhydride, produced by Wako Pure Chemical Industries, Ltd.) to prepare the waste-treating materials of the present invention. Table 23 shows the composition of thus prepared treating materials.

Table 23

| Composition of treating material | | | | |
|---|---|---|---|---|
| Treating material No. | Kind of carbonate | Amount of porous silicon dioxide in treating material (wt.%) | Amount of carbonate in treating material (wt.%) | Added amount of treating material to the dust (wt. parts) |
| Treating material 10-1 | $Na_2CO_3$ | 50 | 50 | 20 |
| Treating material 10-2 | $K_2CO_3$ | 67 | 33 | 15 |
| Treating material 10-3 | $K_2CO_3$ | 50 | 50 | 20 |
| Treating material 10-4 | $K_2CO_3$ | 40 | 60 | 25 |

An aliquot of 30 g of the dust K which contained a large amount of lead, which was subjected to injection of a large amount of calcium hydroxide, and which was discharged from a municipal waste incineration plant was mixed with a specified amount of the above-described treating material powder and with 18 g of water to knead all of them together at 20°C for 1 day to cure and solidify. The dust K showed 73 mg/L of Pb elution, pH 12.30, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 24. Table 24 also shows the amount of lead elution in comparative examples in which solely porous silicon dioxide was added and in which solely water kneading is applied.

Table 24

| Elution test result | | | | | | |
|---|---|---|---|---|---|---|
| Example No. | Treating material | Amount of porous silicon dioxide to the amount of dust (wt. parts) | Amount of carbonate to dust (wt. parts) | Amount of lead elution (mg/L) | Amount of Ca elution (mg/L) | pH (-) |
| Example 10-1 | Treating material 10-1 | 10 | 10 | 0.64 | 4500 | 12.24 |
| Example 10-2 | Treating material 10-2 | 10 | 5 | 0.94 | 5400 | 12.23 |
| Example 10-3 | Treating material 10-3 | 10 | 10 | 0.52 | 4100 | 12.29 |
| Example 10-4 | Treating material 10-4 | 10 | 15 | 0.35 | 3100 | 12.35 |
| Comparative Example 10-1 | Silicon dioxide | 10 | 0 | 1.9 | | 12.25 |
| Comparative Example 10-2 | solely water kneading | - | - | 27 | | 12.32 |
| Comparative Example 10-3 | Not treated | - | - | 73 | | 12.30 |

The result sown in Table 24 indicates that, when carbonate is added to porous silicon dioxide for treating waste, the effect of lead stabilization of the porous silicon dioxide is enhanced. The result also suggests that $K_2CO_3$ which has higher solubility gives stronger effect than $Na_2CO_3$. From the table, it is understood that the amount of elution of lead decreases by increasing the adding amount of carbonate ($K_2CO_3$). Also in this case, reduction in Ca concentration reduces the amount of lead elution.

Example 11

A synthetic silicon dioxide (BS$_3$0$_4$, produced by Shionogi & Co., Ltd.; 500 m$^2$/g of specific surface area) or a synthetic aluminum silicate (Kyowado PEL700, produced by Kyowa Kagaku Co., Ltd., 500 m$^2$/g of specific surface area) was mixed with the equal amount of K$_2$CO$_3$ (anhydride salt, produced by Wako Pure Chemical Industries, Ltd.) to prepare the treating materials listed in Table 25.

Table 25

| Composition of treating material | | | |
|---|---|---|---|
| Treating material No. | Synthetic silicon dioxide (wt.%) | Synthetic aluminum silicate (wt.%) | K$_2$CO$_3$ (wt.%) |
| Treating material 11-1 | 50 | 0 | 50 |
| Treating material 11-2 | 0 | 50 | 50 |
| Comparative material 11-1 | 100 | 0 | 0 |
| Comparative material 11-2 | 0 | 100 | 0 |

An aliquot of 30 g of the dust K which contained a large amount of lead, which was subjected to injection of a large amount of calcium hydroxide, and which was discharged from a municipal waste incineration plant was mixed with 4.5 g (15 wt. parts) of the above-described treating material and with 18 g of water to knead all of them together to cure at 20°C for 1 day to solidify. The dust K showed 73 mg/L of Pb elution, pH 12.30, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 26. Table 26 also shows the amount of lead elution in comparative examples in which solely inorganic adsorbent used in the Examples at a rate of 3 g (10 wt. parts).

Table 26

| Result of elution test | | | | |
|---|---|---|---|---|
| Example No. | Treating material No. | Added amount of inorganic adsorbent to the amount of dust (wt. parts) | Amount of lead elution (mg/L) | pH (-) |
| Example 11-1 | Treating material 11-1 | 7.5 | 0.49 | 12.15 |
| Example 11-2 | Treating material 11-2 | 7.5 | 0.64 | 12.19 |
| Comparative Example 11-1 | Comparative material 11-1 | 10 | 0.80 | 12.23 |
| Comparative Example 11-2 | Comparative material 11-2 | 10 | 0.93 | 12.24 |

The result shown in Table 26 indicates that the Examples give higher performance of lead stabilization than the Comparative Examples while the Examples use less amount of inorganic adsorbent than in the Comparative Examples. That is, the addition of carbonate (K$_2$CO$_3$) to inorganic adsorbent enhances the performance of lead stabilization.

Example 12

A synthetic silicon dioxide (BS$_3$0$_4$, produced by Shionogi & Co., Ltd.; 500 m$^2$/g of specific surface area) was mixed with the equal amount of K$_2$CO$_3$ or Na$_2$CO$_3$ (anhydride salt reagent, produced by Wako Pure Chemical Industries, Ltd.) to prepare the treating materials listed in Table 27. As the comparative material, a treating material was prepared by adding aluminum sulfate, which is commonly used as a component of treating material for municipal waste incinerated dust, to the above-described silicon dioxide.

Table 27

| Composition of treating material | | | | |
|---|---|---|---|---|
| Treating material No. | Synthetic silicon dioxide (wt.%) | $K_2CO_3$ (wt.%) | $Na_2CO_3$ (wt.%) | Aluminum sulfate (18 hydrate)(wt.%) |
| Treating material 12-1 | 50 | 50 | 0 | 0 |
| Treating material 12-2 | 50 | 0 | 50 | 0 |
| Comparative material 12 | 50 | 0 | 0 | 50 |

An aliquot of 30 g of the dust I which contained a large amount of lead, which was subjected to injection of a large amount of calcium hydroxide, and which was discharged from a municipal waste incineration plant was mixed with 6 g (20 wt. parts) of the above-described treating material and with 18 g of water to knead all of them together to cure at 20°C for 1 day to solidify. The dust I showed 450 mg/L of Pb elution, pH 11.91, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 28.

Table 28

| Result of elution test | | | | |
|---|---|---|---|---|
| Example No. | Treating material No. | Added amount of treating material (wt.%) | Amount of lead elution (mg/L) | pH (-) |
| Example 12-1 | Treating material 12-1 | 20 | 4.6 | 11.84 |
| Example 12-2 | Treating material 12-2 | 20 | 6.3 | 11.86 |
| Comparative Example 12 | Comparative material 12 | 20 | 8.3 | 11.75 |

The test result shown in Table 28 indicates that the treating material of the present invention prepared by adding carbonate to inorganic adsorbent is superior to the treating material (comparative material) prepared by adding aluminum sulfate (18 hydrate) which is commonly used as a treating material for dust in the performance of lead stabilization.

Example 13

By mixing an aliquot of porous silicon dioxide powder (250 $m^2$/g of specific surface area) used in Example 2 with several kinds of phosphates listed in Table 29, the waste- treating materials (treating materials 13-1 through 13-3) of the present invention were prepared. Sole amorphous aluminum hydroxide was used as the comparative material 13.

Table 29

| Composition of treating material | | | |
|---|---|---|---|
| Treating material No. | Porous silicon dioxide (wt.%) | Phosphate (wt.%) | Kind of phosphate |
| Treating material 13-1 | 50 | 50 | $Na_3PO_4$ |
| Treating material 13-2 | 50 | 50 | $Na_2HPO_4$ |
| Treating material 13-3 | 50 | 50 | $NaH_2PO_4$ |
| Comparative material 13 | 100 | 0 | - |

An aliquot of 30 g of the dust J which contained a large amount of lead, which was subjected to injection of a large amount of calcium hydroxide, and which was discharged from a municipal waste incineration plant was mixed with 6 g (20 wt. parts) of the above-described treating material and with 18 g of water to knead all of them together and to cure at 20°C for 1 day to solidify. The dust J showed 94 mg/L of Pb elution, pH 12.40, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 30. As a comparative example, the amount of lead elution under the addition of 6g of sole above-described porous silicon dioxide (comparative material 13) is also given in the table. Table 30 includes the amount of lead elution of the tested dust J used in non-treated state.

Table 30

| Result of elution test | | | | |
|---|---|---|---|---|
| Example No. | Treating material No. | Added amount of treating material (wt. parts) | Amount of lead elution (mg/L) | pH (-) |
| Example 13-1 | Treating material 13-1 | 20 | 0.35 | 12.39 |
| Example 13-2 | Treating material 13-2 | 20 | 0.34 | 12.35 |
| Example 13-3 | Treating material 13-3 | 20 | 0.30 | 12.31 |
| Comparative Example 13-1 | Comparative material 13 | 20 | 0.62 | 12.29 |
| Comparative Example 13-2 | Not-treated | - | 94 | 12.40 |

The test result shown in Table 30 indicates that the waste-treating materials of the present invention using simultaneously porous silicon dioxide with phosphate is superior to the treating materials using sole porous silicon dioxide in the performance of lead stabilization. Among the phosphates tested, the phosphate of 2 hydrate shows better performance of lead stabilization, and the use of $NaH_2PO_4$ can reduce the amount of lead elution to or below the regulation value (0.3 mg/L).

Example 14

A synthetic aluminum silicate powder (Kyowado PEL700PEL, made by Kyowa Kagaku Co., Ltd., 500 $m^2$/g of specific surface area) was mixed with $NaH_2PO_4$ (anhydride salt, produced by Wako Pure Chemical Industries, Ltd.) to prepare the treating material (treating material 14) of the present invention. A treating material using solely above-described porous aluminum silicate was used as the comparative material 14.

Table 31

| Composition of treating material | | |
|---|---|---|
| Treating material No. | Porous aluminum silicate (wt.%) | $NaH_2PO_4$ (wt.%) |
| Treating material 14 | 50 | 50 |
| Comparative material 14 | 100 | 0 |

An aliquot of 30 g of the dust J which contained a large amount of lead, which was subjected to injection of a large amount of calcium hydroxide, and which was discharged from a municipal waste incineration plant was mixed with 4.5 g (15 wt. parts) or 6 g (20 wt. parts) of the above- described treating material and with 18 g of water to knead all of them together and to cure at 20°C for 1 day to solidify. The dust J showed 94 mg/L of Pb elution, pH 12.40, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 32. Table 32 also shows a comparative example of the amount of lead elution, in which solely the above-described porous aluminum silicate (comparative material 14) was added at a rate of 4.5 g (15 wt. parts) or 6 g (20 wt. parts).

24

Table 32

| Result of elution test | | | | |
|---|---|---|---|---|
| Example No. | Treating material No. | Added amount of inorganic adsorbent (wt. parts) | Amount of lead elution (mg/L) | pH (-) |
| Example 14-1 | Treating material 14 | 15 | 0.45 | 12.15 |
| Example 14-2 | Treating material 14 | 20 | 0.25 | 12.08 |
| Comparative Example 14-1 | Comparative material 14 | 15 | 0.68 | 12.20 |
| Comparative Example 14-2 | Comparative material 14 | 20 | 0.50 | 12.19 |
| Comparative Example 14-3 | Anhydride | - | 450 | 12.40 |

The test result shown in Table 32 indicates that the treating material of the present invention simultaneously using porous aluminum silicate powder with $NaH_2PO_4$ is superior to the treating material using sole porous aluminum silicate in the performance of lead stabilization. As seen in the table, the addition of 20 wt. parts of the treating material of the present invention allows to reduce the amount of lead elution to and below the regulation value (0.3 mg/L).

Example 15

The waste-treating materials (treating materials 15-1 through 15-3) of the present invention were prepared by mixing an aliquot of amorphous aluminum hydroxide powder used in Example 1, an aliquot of porous silicon dioxide powder (250 $m^2$/g of specific surface area) used in Example 2, and calcium hydroxide (produced by Wako Pure Chemical Industries, Ltd.) at a mixing ratio given in Table 33. A treating material using solely amorphous aluminum hydroxide was used as the comparative material 15-1, and a treating material using solely porous silicon dioxide was used as the comparative material 15-2.

Table 33

| Composition of treating material | | | |
|---|---|---|---|
| Treating material No. | Amorphous aluminum hydroxide (wt.%) | Porous silicon dioxide (wt.%) | Calcium hydroxide (wt.%) |
| Treating material 15-1 | 80 | 10 | 10 |
| Treating material 15-2 | 60 | 10 | 30 |
| Treating material 15-3 | 40 | 10 | 50 |
| Comparative material 15-1 | 100 | 0 | 0 |
| Comparative material 15-2 | 0 | 100 | 0 |

An aliquot of 30 g (100 wt. parts) of the dust L which contained a large amount of lead and which was discharged from a municipal waste incineration plant was mixed with 4.5 g (15 wt. parts) of the above-described treating materials (treating materials 15-1 through 15-3) and with 18 g (60 wt. parts) of water to knead all of them together and to cure at 20°C for 1 day to solidify. The dust L showed 99 mg/L of Pb elution, pH 6.40, which values were determined in a non-treated state conforming to the testing method per Notification No.13 of the Environmental Agency. To check the non-harmful property of the waste treated by the treating materials, the lead elution test was given conforming to the testing method per Notification No.13. The test result is shown in Table 34. Table 34 also shows comparative examples of the amount of lead elution, in which solely the above-described amorphous aluminum hydroxide (Comparative material 15-1) was added at a rate of 15 wt. parts, and in which solely porous silicon dioxide (Comparative material 15-2) was added at a rate of 15 wt. parts. Table 34 lists the amount of lead elution under a non-treated condition of the dust used in the test.

Table 34

| Result of elution test | | | | | |
|---|---|---|---|---|---|
| Example No. | Treating material No. | Added amount of treating material (wt. parts) | Number of curing days | Amount of lead elution (mg/L) | pH (-) |
| Example 15-1 | Treating material 15-1 | 15 | 1 day | 27 | 6.65 |
| Example 15-2 | Treating material 15-2 | 15 | 1 day | 0.76 | 8.18 |
| Example 15-3 | Comparative Material 15-3 | 15 | 1 day | <0.1 | 9.63 |
| Comparative Example 15-1 | Comparative Material 15-1 | 15 | 1 day | 41 | 6.36 |
| Comparative Example 15-2 | Comparative Material 15-2 | 15 | 1 day | 32 | 6.37 |
| Comparative Example 15-3 | Not-treated | - | - | 99 | 6.40 |

The test result shown in Table 34 indicates that the treating materials of the present invention simultaneously using porous aluminum silicate powder, inorganic adsorbent, and calcium hydroxide is superior to the treating material consisting simply of porous aluminum silicate powder and inorganic adsorbent against the dust of low alkalinity in the performance of lead stabilization because the treating material of the present invention is able to increase pH value from around neutral to a level of 10.

[Industrial Applicability]

Treatment of waste such as EP ashes and bag filter ashes (particularly EP ashes and bag filter ash which were subjected to injection of calcium hydroxide or calcium oxide) which contain harmful metals and which are discharged from industrial waste incinerators and municipal waste incinerators, using the waste-treating material of the present invention is very effective for stabilizing efficiently harmful metals particularly lead, for reducing the amount of elution of harmful metals, and for stabilizing harmful metals. The treatable harmful metals include chromium, copper, and zinc, as well as lead. The use of waste-treating material of the present invention allows to treat industrial waste which contains harmful heavy metals and to treat industrial treated-waste containing heavy metals coming from semiconductor plants and plating plants. Furthermore, the waste-treating material of the present invention conducts treatment for stabilizing: slurry sludge and dewatering cake sludge which are discharged from semiconductor plants and plating plants after the treatment of various kinds of waste liquids; collected harmful dust generated to conserve safe environment of working places around electric furnace and fusion furnace in steel making works; dust generated from municipal waste fusion furnace; or contaminated soil generated from waste landfill area. By the treatment functions, harmful metals are stabilized and their elution is suppressed.

**Claims**

1. A waste-treating material for treating waste containing at least one harmful metal selected from the group consisting of lead, chromium, copper, and zinc, said waste-treating material comprising as main component at least one material selected from the group consisting of an X-ray-analytically amorphous aluminum hydroxide, a porous inorganic adsorbent in a powder form, a water-soluble phosphate, and a water-soluble carbonate.

2. A waste-treating material for treating waste as claimed in claim 1, wherein said waste-treating material contains as main component 10 wt.% or more of the aluminum hydroxide.

3. A waste-treating material for treating waste as claimed in claim 1, comprising as main components said aluminum hydroxide and said porous inorganic adsorbent, wherein said waste-treating material contains said aluminum hydroxide equal to or greater than 20 wt.% but less than or equal to 95 wt.%.

4. A waste-treating material for treating waste as claimed in claim 3, wherein said waste-treating material contains said aluminum hydroxide equal to or greater than 20 wt.% but less than or equal to 80 wt.%.

5. A waste-treating material for treating waste as claimed in claim 1, comprising as main components said aluminum hydroxide and said water-soluble phosphate, wherein said waste-treating material contains said aluminum hydroxide equal to or greater than 20 wt.% but less than or equal to 95 wt.%.

6. A waste-treating material for treating waste as claimed in claim 5, wherein said waste-treating material contains said aluminum hydroxide equal or greater than 20 wt.% but less than or equal to 80 wt.%.

7. A waste-treating material for treating waste as claimed in any one of claims 2 to 6, wherein, said waste-treating material further contains as an alkali neutralizer at least one material selected from the group consisting of iron sulfide, iron chloride, and aluminum sulfate.

8. A waste-treating material for treating waste as claimed in any one of claims 2 to 6, wherein said waste-treating material further contains as an alkali additive at least one material selected from the group consisting of water glass, sodium hydroxide, calcium hydroxide, and cement.

9. A waste-treating material for treating waste as claimed in claim 1, comprising as main components said porous inorganic adsorbent and said water-soluble carbonate, wherein said waste-treating material contains the water-soluble carbonate equal to or greater than 20 wt.% but less than or equal to 80 wt.%.

10. A waste-treating material for treating waste as claimed in claim 1, comprising, further to said porous inorganic adsorbent and said water-soluble carbonate, as main component alumina cement, wherein said waste-treating material contains said porous inorganic adsorbent equal to or greater than 20 wt.% but less than or equal to 80 wt.%.

11. A waste-treating material for treating waste as claimed in claim 1, comprising as main components said porous inorganic adsorbent and said water-soluble phosphate, wherein said waste-treating material contains said water-soluble phosphate equal to or greater than 20 wt.% but less than or equal to 80 wt.%.

12. A waste-treating material for treating waste as claimed in any one of claims 1 to 6, wherein said aluminum hydroxide is a waste aluminum hydroxide generated from an alumite processing.

13. A waste-treating material for treating waste as claimed in claim 12, wherein said aluminum hydroxide is of a powder body prepared from a dewatering cake of said waste aluminum hydroxide by drying at 250°C or below the temperature thereof and by pulverizing thus dried cake.

14. A waste-treating material for treating waste as claimed in any one of claims 1, 3, or 9 to 11, wherein said porous inorganic adsorbent comprises at least one material selected from the group consisting of a porous aluminum silicate in a powder form and a porous silicon dioxide, wherein said porous inorganic adsorbent has a specific surface area of equal to or greater than 200 $m^2$/g but less than or equal to 700 $m^2$/g determined by BET surface area method ($N_2$).

15. A waste-treating material for treating waste as claimed in claim 1, 5, or 11, wherein said water-soluble phosphate comprises at least one salt of phosphoric acid selected from the group consisting of phosphoric acid, hypophosphoric acid, metaphophoric acid, and polyphosphoric acid.

16. A waste-treating material for treating waste as claimed in claim 15, wherein said water-soluble phosphate comprises a di-hydrogen phosphate in a powder form.

17. A waste-treating material for treating waste as claimed in claim 16, wherein said di-hydrogen phosphate is $NaH_2PO_4$.

18. A waste-treating material for treating waste as claimed in claim 1, 9, or 10, wherein said water-soluble carbonate comprises at least one material selected from the group consisting of $Na_2CO_3$, $K_2CO_3$, and $KHCO_3$.

**19.** A method for treating waste, said waste containing at least one harmful metal selected from the group consisting of lead, chromium, copper, and zinc, said method comprising the steps of:

mixing 100 wt. parts of said waste with 3 to 30 wt. parts of a waste-treating material containing as main component at least one material selected from the group consisting of an X-ray-analytically amorphous aluminum hydroxide, a porous inorganic adsorbent powder, a water-soluble phosphate, and a water-soluble carbonate; and
kneading the mixture with adding water at need.

**20.** A method for treating waste as claimed in claim 19, comprising the steps of:

mixing said waste-treating material in a powder form with said waste; and
kneading the mixture with adding water at need.

**21.** A method for treating waste as claimed in claim 19, comprising the steps of:

mixing 3 to 30 wt. parts of said aluminum hydroxide with 100 wt. parts of said waste; and
kneading the mixture with adding water at need.

**22.** A method for treating waste as claimed in claim 19, comprising the steps of:

mixing 3 to 27 wt. parts of said aluminum hydroxide in a form of powder or slurry with 100 wt. parts of said waste;
adding 3 to 27 wt. parts of at least one selected from said porous inorganic adsorbent and said water-soluble phosphate to mix; and
kneading the mixture with adding water at need.

**23.** A method for treating waste as claimed in claim 19, comprising the steps of:

mixing 3 to 27 wt. parts of at least one selected from said porous inorganic adsorbent and said water-soluble phosphate with 100 wt. parts of said waste;
adding 3 to 27 wt. parts of said aluminum hydroxide in a form of powder or slurry to mix; and
kneading the mixture with adding water at need.

**24.** A method for treating waste as claimed in claim 19, comprising the steps of:

adding 3 to 27 wt. parts of said carbonate in a form of aqueous solution or aqueous suspension to 100 wt. parts of said waste;
adding 3 to 27 wt. parts of at least one selected from said aluminum hydroxide and said porous inorganic adsorbent to mix; and
kneading the mixture with adding water at need.

**25.** A method for treating waste as claimed in claim 19, comprising the steps of:

adding 3 to 27 wt. parts of said carbonate in a form of aqueous solution or aqueous suspension to 100 wt. parts of said waste;
adding 3 to 27 wt. parts of at least one selected from said porous silicon dioxide and said porous aluminum silicate to mix; and
kneading the mixture with adding water at need.

**26.** A method for treating waste as claimed in claim 19, comprising the steps of:

adding 3 to 27 wt. parts of at least one selected from said aluminum hydroxide and said porous inorganic adsorbent to 100 wt. parts of said waste;
adding 3 to 27 wt. parts of said carbonate in a form of aqueous solution or aqueous suspension to mix; and
kneading the mixture with adding water at need.

**27.** A method for treating waste as claimed in claim 19, comprising the steps of:

adding 3 to 27 wt. parts of at least one selected from a porous silicon dioxide and a porous aluminum silicate to 100 wt. parts of said;

adding 3 to 27 wt. parts of the carbonate in a form of aqueous solution or aqueous suspension to mix; and kneading the mixture with adding water at need.

28. A method for treating waste as claimed in claim 19, comprising the steps of:

kneading said waste and said treating material; and curing the mixture to solidify.

29. A method for treating waste as claimed in claim 19, wherein said waste include incinerated ashes of municipal waste such as incinerated dust, main ashes, and fused dust; incinerated ashes of industrial waste; shredder dust; sludge; slag; or contaminated soil.

30. A method for treating waste as claimed in claim 29, wherein said waste comprise high alkaline incinerated dust of municipal waste.

31. A method for treating waste as claimed in claim 30, wherein said waste comprise incinerated dust of municipal waste containing 5 m-mole or more of alkali amount **y** (m-mole per 1 g of waste), said alkali amount **y** (m-mole per 1 g of waste) being calculated by a formula of

$$[y = 50 - x],$$

where **x** (ml) is an added amount of 1N sodium hydroxide solution necessary to obtain pH 7 of a system prepared by mixing 1 g of waste with 100 ml of 0.5N hydrochloric acid to shake at 20°C for 20 hours.

32. A method for treating waste as claimed in claim 19, comprising the steps of:

mixing as main components said aluminum hydroxide and said porous adsorbent, and further mixing as alkali additive at least one selected from the group consisting of water glass, sodium hydroxide, calcium hydroxide, and cement with 100 wt. parts of waste containing less than 5 m-mole of alkali amount **y** per 1 g of waste; and kneading the mixture with adding water at need,
wherein said alkali amount **y** (m-mole per 1 g of waste) is calculated by a formula of

$$[y = 50 - x],$$

where **x** (ml) is an added amount of 1N sodium hydroxide solution necessary to obtain pH 7 of a system prepared by mixing 1 g of waste with 100 ml of 0.5N hydrochloric acid to shake at 20°C for 20 hours.

33. A method for treating waste as claimed in claim 19, comprising the steps of:

kneading said waste and said treating material; and curing the mixture to solidify.

## INTERNATIONAL SEARCH REPORT

| International application No. |
|---|
| PCT/JP96/01885 |

**A. CLASSIFICATION OF SUBJECT MATTER**
Int. Cl$^6$  B09B3/00, A62D3/00

According to International Patent Classification (IPC) or to both national classification and IPC

**B. FIELDS SEARCHED**

Minimum documentation searched (classification system followed by classification symbols)
Int. Cl$^6$  B09B3/00, A62D3/00, C02F11/00-11/20

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 51-120975, A (Kisaku Nakanishi), October 22, 1976 (22. 10. 76)(Family: none) Page 2, upper left column, line 6 to upper right column, line 14 | 1, 2, 19-21, 28, 33 |
| X | JP, 06-328063, A (Pollution Scincies Kenkyusho K.K.), November 29, 1994 (29. 11. 94)(Family: none) Column 3, line 9 to column 4, line 31 | 1, 11, 15-17, 19, 20, 28-30, 33 |
| X | JP, 07-39847, A (K.K. Entec), February 10, 1995 (10. 02. 95)(Family: none) Column 2, line 34 to column 4, line 5 | 1, 11, 15-17, 19, 20, 29, 30 |
| X | JP, 52-62186, A (Keio Fujibeton Kensetsu K.K.), May 23, 1977 (23. 05. 77)(Family: none) Claim 1; page 2, upper left column, line 8 to page 3, upper left column, line 5 | 1, 19 |
| X | JP, 04-61710, B (Wheelabrator Environmental Systems Inc.), | 1, 19 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | | |
| "O" | document referring to an oral disclosure, use, exhibition or other means | "Y" | document of particular relevance; the claimed invention cannot be considered to involve an inventive step when the document is combined with one or more other such documents, such combination being obvious to a person skilled in the art |
| "P" | document published prior to the international filing date but later than the priority date claimed | "&" | document member of the same patent family |

| Date of the actual completion of the international search | Date of mailing of the international search report |
|---|---|
| September 26, 1996 (26. 09. 96) | October 8, 1996 (08. 10. 96) |

| Name and mailing address of the ISA/ Japanese Patent Office | Authorized officer |
|---|---|
| Facsimile No. | Telephone No. |

Form PCT/ISA/210 (second sheet) (July 1992)

## INTERNATIONAL SEARCH REPORT

International application No.

PCT/JP96/01885

C (Continuation). DOCUMENTS CONSIDERED TO BE RELEVANT

| Category* | Citation of document, with indication, where appropriate, of the relevant passages | Relevant to claim No. |
|---|---|---|
| | October 1, 1992 (01. 10. 92)<br>& US, 4737356, A & EP, 335024, A1<br>Column 8, line 32 to column 12, line 23 | |
| A | JP, 06-190356, A (Tomoji Miyata),<br>July 12, 1994 (12. 07. 94)(Family: none)<br>Abstract; column 3, line 8 to column 4, line 41 | 1-4, 19 |
| E | JP, 08-224558, A (Dowa Mining Co., Ltd.),<br>September 3, 1996 (03. 09. 96)(Family: none)<br>Column 2, lines 21 to 45 | 1, 19 |

Form PCT/ISA/210 (continuation of second sheet) (July 1992)